# EUROPEAN PATENT SPECIFICATION

(11) **EP 3 369 308 B1**
(45) Date of publication and mention of the grant of the patent: **05.08.2020**
(21) Application number: 16871040.8
(22) Date of filing: 30.11.2016
(51) Int. Cl.: A01G 7/04, A23L 11/00

(54) **METHOD FOR INCREASING CONTENT OF COUMESTROL OF GERMINATED AND FERMENTED BEANS BY USING LIGHT EMITTING DIODES**
VERFAHREN ZUR ERHÖHUNG DES GEHALTS AN COUMESTROL VON GEKEIMTEN UND FERMENTIERTEN BOHNEN DURCH VERWENDUNG VON LEUCHTDIODEN
PROCÉDÉ POUR AUGMENTER LA TENEUR EN COUMESTROL DE HARICOTS GERMÉS ET FERMENTÉS EN UTILISANT DES DIODES ÉLECTROLUMINESCENTES

(30) Priority: 30.11.2015 KR 20150168963
(43) Date of publication of application: 05.09.2018
(73) Proprietor: Hubio, Seoul 16024 (KR); Republic of Korea Management: Rural Development Administration, Jeonju-si, Jeollabuk-do 54875 (KR)
(72) Inventor: LEE, Dong Sung, Uiwang-si, Gyeonggi-do 16024 (KR); MOON, Jung Kyung, Wanju-gun, Jeollabuk-do 55365 (KR)
(74) Representative: Brevalex
(86) International application number: PCT/KR2016/013978
(87) International publication number: WO 2017/095144

(56) References cited:
- JP-A- 2009 240 193
- KR-A- 20110 009 402
- KR-A- 20110 089 107
- KR-A- 20120 084 920
- KR-A- 20130 067 781
- US-A1- 2003 235 644
- HEE YOUNG JEON ET AL: "Effect of Aspergillus oryzae -Challenged Germination on Soybean Isoflavone Content and Antioxidant Activity", JOURNAL OF AGRICULTURAL AND FOOD CHEMISTRY, vol. 60, no. 11, 21 March 2012 (2012-03-21), pages 2807-2814, XP055322300, US ISSN: 0021-8561, DOI: 10.1021/jf204708n

## Description

### [Technical Field]

The present invention relates to the field of food and agricultural technology, and more specifically to a method for increasing the content of coumestrol of germinated and fermented beans by germinating and fermenting beans and simultaneously irradiating visible light thereto by using light emitting diodes in an adequate amount every day.

### [Background Art]

The market scale of bean sprouts industry in South Korea is 700 billion per year, and there are about 3,500 commercial bean sprouts growers. In addition, the annual consumption per capita is 12 to 13kg, which is the third highest intake per Korean adult among vegetables. Bean sprouts obtained by germinating beans are not only nutritious foods rich in protein, vitamin, isoflavone, etc. but also traditional Korean-style foods that are cheap in price and can be supplied throughout the year regardless of season. The appearance of traditional bean sprouts are yellow cotyledons, white hypocotyls and shapes without rootles, and these shapes are appearance features of bean sprouts that general consumers prefer. In the bean sprouts developed in South Korea so far, there are a lot of varieties having purple color hypocotyl, and the like.

In addition, in a general method of producing bean sprouts, germination and growth are performed in a state where beans are not irradiated with light. It is known that this method is carried out by soaking beans in water and spreading rice straw on a jar, putting the beans on it, germinating the beans in a dark place in a warm and moist environment, continuing to water the beans so that they do not dry, and harvesting them when fully grown. Unlike ordinary vegetables grown by photosynthesis, the bean sprouts thus harvested germinate and grow in a dark room due to a respiratory action consuming nutrients present in the bean sprouts themselves, and thereby nutrients of beans themselves are almost consumed and the content of various nutrients is extremely lower than that contained in the beans.

In particular, coumestrol of beans is known to be 30 to 100 times higher in estrogen activity than isoflavone, as well-known in various papers. It is also known that coumestrol controls the balance and content of female hormones to prevent breast cancer and uterine cancer, and delays the menopause or alleviates the symptoms associated therewith. The following Formula 1 is a chemical formula of coumestrol, and the following Formulas 2 and 3 are a chemical formula of isoflavone. 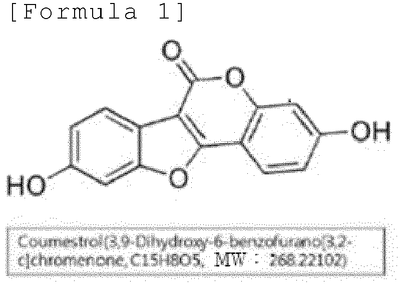 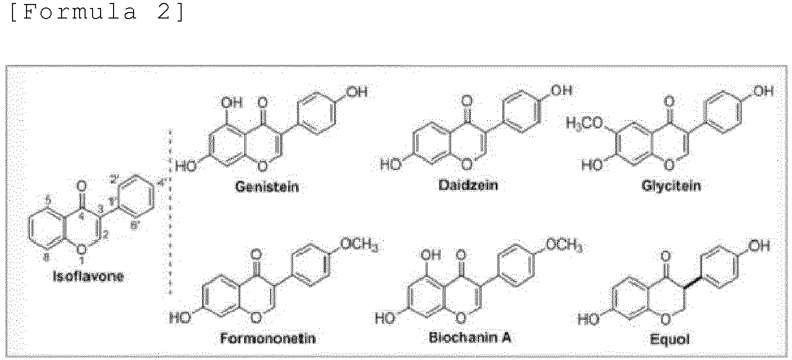 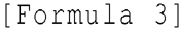 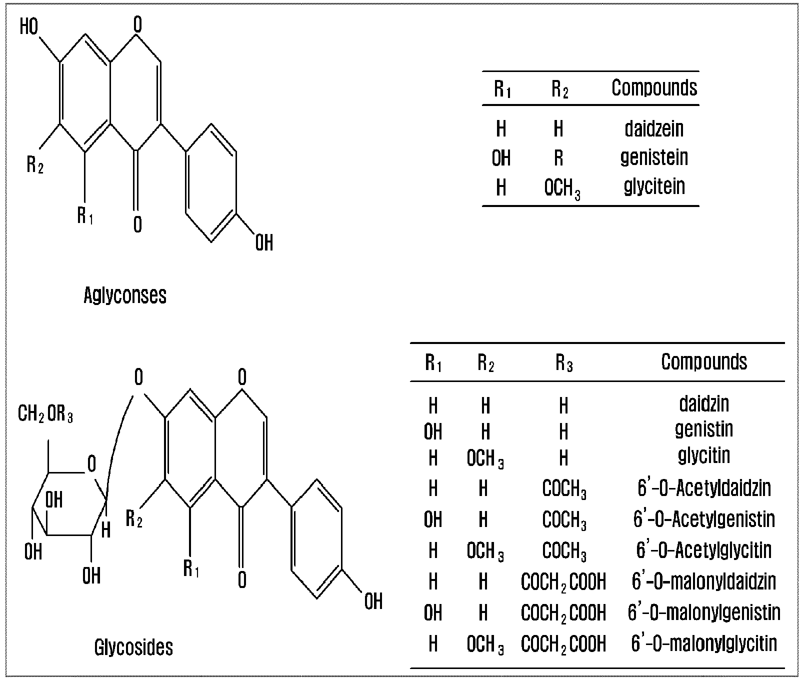 Coumerstrol is a substance mainly found from seeds, roots and leaves of Leguminosae family and Compositae family plants. Coumerstrol is a type of isoflavonoids, and is generally classified as coumestan-based compounds. Coumerstrol is a component with little or no common beans and is first produced when beans are germinated (Food Sci. Biotechnol., 12(3), 278-284, 2003). As the initial germination increases, its content is also known to increase (J. Agric Food Chem., 48(6), 2167-2172, 2000). It is also known that coumerstrol has the more potent ability to bind estrogen receptors (hereinafter, referred to as ER) than genistein (J Steroid Biochem Mol Biol., 91(3), 99-109, 2004). Therefore, although there is a difference in affinity for ER-α or ER-β, it is thought that coumerstrol also exhibits physiological activities similar to that of genistein and thus, various studies thereon have been conducted and reported. Moreover, it is known that coumerstrol has a mild antioxidant effect, and thus exhibits antibacterial, antifungal and antiviral actions when plants are exposed to external injuries and serves to prevent infection (Darbarwar, M., et al., J. Sic. Ind. Res., 35, 297(1982); Jeffrey, B. H., et al., Phytochemical Dictionary, Taylor & Francis, London, pp. 418 (1933)). Further, its accurate mechanism is not known, but it is known to promote the formation of connective tissues such as collagen of the skin and organ tissues. Thus, it is presumed that coumerstrol has an effect of suppressing aging and wrinkle formation in terms of histology (Bickoff, E. M., et al., J. Anim. Sic., 19, 4(1960)). Studies have been conducted to increase the content of coumerstrol.

Korean Patent No. 10-1326979 discloses a method for producing coumerstrol and a coumerstrol produced thereby, which is a method for increasing coumerstrol in bean sprouts, but a method using only simple fermentation of beans, which is different in constitution from the present invention.

### [DETAILED DESCRIPTION OF THE INVENTION]

### [Technical Problem]

The present invention has been made in order to solve the above-mentioned problems and an object thereof is to provide a method for increasing the content of coumestrol of germinated and fermented beans using light emitting diodes.

### [Technical Solution]

In order to achieve the above object, the present invention provides a method for increasing the content of coumestrol of germinated and fermented beans using light emitting diodes, the method comprising a fermentation step of germinating a soybean and fermenting the bean by an inoculation with *Aspergillus oryzae* to prepare a germinated and fermented bean; and an irradiation step of irradiating light emitting diodes to the germinated and fermented bean simultaneously with the fermentation step.

According to the present invention, the irradiation step is carried out by irradiating light emitting diodes at a wavelength of 620 nm to 670 nm.

According to an embodiment of the present invention, the irradiation step can be carried out 2 to 10 times every 20 to 40 minutes per day, for 1 to 7 days.

### [ADVANTAGEOUS EFFECTS]

The germinated and fermented beans having an increased content of coumestrol produced by the method for increasing the content of coumestrol of germinated and fermented beans by using light emitting diodes according to the present invention have increased functionality of beans and exhibit the effects of being able to create higher added value compared with conventional beans.

### [BRIEF DESCRIPTION OF DRAWINGS]

FIG. 1 is a flowchart schematically illustrating a process for increasing the content of coumestrol of germinated and fermented beans by using light emitting diodes according to an embodiment of the present invention.
FIG. 2 is a photograph of a light emitting diode control box for irradiating light emitting diodes according to another embodiment of the present invention.
FIG. 3 is a photograph of bean sprouts in which germinated and fermented beans according to another embodiment of the present invention are generally cultivated.
FIG. 4 is a photograph of bean sprouts in which germinated and fermented beans according to another embodiment of the present invention are cultivated by using light emitting diodes.

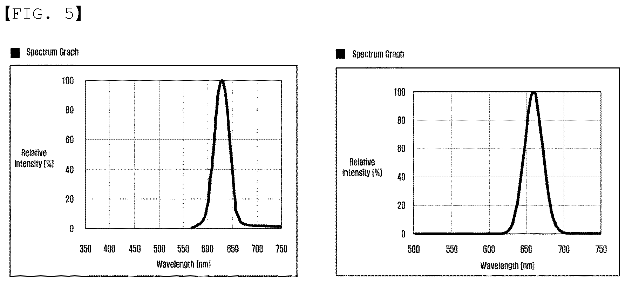

FIG. 5 is a graph obtained by measuring the wavelength when irradiated with a light emitting diode according to another embodiment of the present invention.
FIG. 6 is a diagram illustrating the conditions of an analyzing instrument for coumestrol analysis according to another embodiment of the present invention and the measurement result of coumestrol standard product.

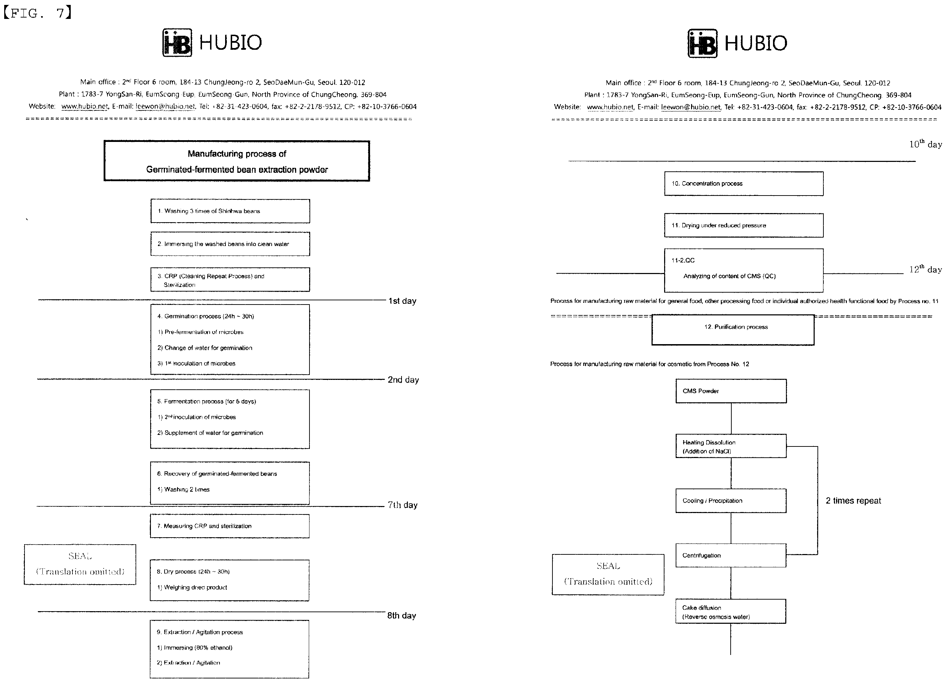

FIG. 7 is a flowchart schematically illustrating a process of producing germinated and fermented bean extract powders with increased content of coumestrol according to another embodiment of the present invention.

### [DETAILED DESCRIPTION OF THE EMBODIMENTS]

Hereinafter, the present invention will be described in more detail.

All technical terms used herein should be construed as having the same meaning as commonly understood by those skilled in the art, and should not be interpreted as being excessively inclusive or excessively restrictive. In addition, when a technical term used herein is an erroneous technical term that does not accurately represent the idea of the present invention, it should be understood as replacing the term by a technical term which can be properly understood by those skilled in the art. The generic term used herein should be interpreted as defined in dictionaries or according to the preceding or subsequent contexts, and should not be interpreted as being excessively restrictive. Further, it should be understood that, unless the context explicitly indicate otherwise, the singular expressions used herein include plural expressions and further comprise additional components or steps in the present invention. In describing the present invention, when it is judged that concrete explanation of the related known technology makes the gist of the invention unclear, a detailed explanation thereof will be omitted.

In order to achieve the above-mentioned object, the present invention provides a method for increasing the content of coumestrol of germinated and fermented beans by using light emitting diodes, the method comprising a fermentation step of germinating a soybean and fermenting the bean by inoculation with *Aspergillus oryzae* to prepare a germinated and fermented bean; and an irradiation step of irradiating light emitting diodes to the germinated and fermented bean simultaneously with the fermentation step.

According to the present invention, the irradiation step is carried out by irradiating light emitting diodes at a wavelength of 620 nm to 670 nm.

According to an embodiment of the present invention, the irradiation step can be carried out 2 to 10 times every 20 to 40 minutes per day, for 1 to 7 days.

There is also provided a germinated and fermented bean having an increased content of coumestrol produced by the above-mentioned method.

Hereinafter, the constitution and effects of the present invention will be described in further detail by way of examples. These examples are provided for illustrative purposes only and are not intended to limit the scope of the present invention thereto.

### <Preparation Example> Preparation of germinated and fermented bean

Among 18 seeds of Shinwa bean (an improved variety of *Glycine max* (L.) Merril), developed by the Crop Basic Fundamental Department of the National Institute of Crop Science, Rural Development Administration, South Korea, excellent seeds were supplied therefrom. In a farm under bean purchase contract with Hubio Company, which is located at Eumsung-gun area of Chungcheongbuk-do, South Korea, the seeds was washed, immersed, germinated, inoculated with *Aspergillus oryzae* and fermented to prepare a germinated and fermented bean.

### <Example 1>

The germinated and fermented bean obtained in Preparation Example was placed in a light emitting diode control box under the conditions where the wavelength of the light emitting diode was 660 nm, and then cultivated by irradiating the light emitting diode three times every half hour per day, for 6 days.

### <Example 2>

The germinated and fermented bean obtained in Preparation Example was placed in a light emitting diode control box under the conditions where the wavelength of the light emitting diode was 630 nm, and then cultivated by irradiating the light emitting diode three times every half hour per day, for 6 days.

### <Example 3>

The germinated and fermented bean obtained in Preparation Example was placed in a light emitting diode control box under the conditions where the wavelength of the light emitting diode was 660 nm, and then cultivated by irradiating the light emitting diode six times every half hour per day, for 6 days.

### <Example 4>

The germinated and fermented bean obtained in Preparation Example was placed in a light emitting diode control box under the conditions where the wavelength of the light emitting diode was 630 nm, and then cultivated by irradiating the light emitting diode six times every half hour per day, for 6 days.

### <Comparative Example>

The germinated and fermented beans obtained in Preparation Example were cultivated through a general method for cultivating general bean sprouts.

1 kg of bean sprouts cultivated according to the respective methods of Example 1 to 4 and Comparative Example were sampled and dried for one day. Then, individual contours were inspected and the content of coumestrol was measured. In addition, it was cultivated by irradiating 9 times every half hour per day, for 6 days, but it was confirmed that, in the case of the bean sprouts obtained by the cultivation method of Comparative Example, the bean portion became blue through photosynthesis, rather than purple coloration of the hypocotyl and the body tended to be shorter, but the coumestrol content did not increase.

### <Test Example 1>: Contour, individual inspection.

Twenty individual bean sprouts were sampled from each of Examples 1 to 4 and Comparative Example, and the weight, thickness, full length, and body length were measured.

The results of the inspection of individual contours of Examples 1 & 2 and Comparative Example are shown in Table 1 below, and the results of the inspection of individual contours of Examples 3 & 4 are shown in Table 2 below.

**[Table 1]**

| | Example 1 | | | | Example 2 | | | | Comparative Example | | | |
|---|---|---|---|---|---|---|---|---|---|---|---|---|
| | Weight (g) | Thickness (mm) | Full length (cm ) | Body (cm) | Weight (g) | Thickness (mm) | Full length (cm) | Body (cm) | Weight (g) | Thickness (mm) | Full length (cm) | Body (cm) |
| 1 | 0.48 | 2.2 | 16.5 | 8.5 | 0.57 | 2.2 | 17.0 | 8.5 | 0.66 | 1.9 | 21.0 | 13.6 |
| 2 | 0.61 | 2.2 | 15.2 | 8.4 | 0.28 | 1.7 | 11.0 | 7.8 | 0.63 | 2.1 | 18.0 | 10.5 |
| 3 | 0.44 | 2.2 | 15.0 | 8.3 | 0.56 | 1.8 | 16.0 | 10.5 | 0.68 | 2.0 | 19.5 | 12.2 |
| 4 | 0.39 | 2.0 | 13.0 | 8.0 | 0.37 | 1.8 | 16.1 | 8.4 | 0.49 | 1.9 | 17.5 | 11.5 |
| 5 | 0.48 | 2.1 | 13.4 | 8.1 | 0.50 | 2.2 | 16.3 | 9.7 | 0.67 | 2.0 | 22.0 | 12.5 |
| 6 | 0.64 | 2.1 | 19.5 | 9.0 | 0.48 | 2.1 | 16.2 | 9.2 | 0.66 | 2.0 | 18.0 | 13.0 |
| 7 | 0.44 | 2.2 | 11.9 | 8.0 | 0.46 | 1.9 | 17.8 | 9.9 | 0.61 | 1.9 | 18.5 | 11.9 |
| 8 | 0.41 | 2.0 | 14.5 | 7.7 | 0.51 | 2.0 | 15.7 | 8.5 | 0.72 | 2.0 | 19.2 | 12.4 |
| 9 | 0.64 | 2.2 | 15.5 | 7.6 | 0.51 | 1.9 | 18.5 | 9.5 | 0.44 | 2.0 | 17.5 | 11.5 |
| 10 | 0.58 | 2.2 | 15.1 | 7.5 | 0.55 | 1.6 | 18.7 | 7.5 | 0.55 | 2.0 | 20.5 | 13.8 |
| 11 | 0.66 | 2.1 | 14.2 | 8.2 | 0.48 | 1.7 | 12.6 | 7.2 | 0.73 | 2.1 | 19.7 | 12.9 |
| 12 | 0.74 | 2.7 | 14.6 | 7.3 | 0.54 | 1.8 | 18.0 | 8.1 | 0.53 | 1.9 | 19.1 | 12.4 |
| 13 | 0.51 | 2.4 | 14.2 | 7.5 | 0.31 | 1.5 | 13.3 | 8.2 | 0.41 | 1.9 | 23.0 | 10.5 |
| 14 | 0.51 | 2.4 | 12.2 | 7.9 | 0.51 | 2.0 | 18.5 | 8.2 | 0.41 | 1.8 | 13.5 | 9.5 |
| 15 | 0.41 | 2.1 | 14.3 | 8.2 | 0.48 | 2.0 | 13.5 | 8.1 | 0.43 | 1.9 | 23.0 | 12.6 |
| 16 | 0.39 | 2.0 | 17.5 | 8.5 | 0.51 | 1.7 | 18.1 | 9.2 | 0.64 | 1.9 | 18.8 | 12.4 |
| 17 | 0.71 | 2.3 | 16.5 | 9.6 | 0.45 | 2.0 | 13.0 | 8.5 | 0.51 | 1.9 | 14.9 | 10.2 |
| 18 | 0.38 | 2.2 | 20.0 | 9.4 | 0.52 | 1.9 | 17.8 | 7.6 | 0.46 | 1.9 | 19.0 | 10.5 |
| 19 | 0.53 | 2.1 | 14.9 | 8.2 | 0.50 | 2.0 | 15.5 | 9.5 | 0.37 | 1.7 | 19.5 | 11.6 |
| 20 | 0.43 | 2.2 | 15.0 | 8.3 | 0.45 | 2.0 | 18.0 | 9.7 | 0.58 | 1.9 | 20.0 | 12.0 |
| Average | 0.52 | 0.2 | 15.2 | 8.1 | 0.48 | 1.89 | 16.1 | 8.7 | 0.56 | 1.9 | 19.1 | 11.9 |

**[Table 2]**

| | Example 3 | | | | Example 4 | | | |
|---|---|---|---|---|---|---|---|---|
| | Weight (g) | Thickness (mm) | Full length (cm) | Body (cm) | Weight (g) | Thickness (mm) | Full length (cm) | Body (cm) |
| 1 | 0.48 | 2.2 | 16.5 | 8.5 | 0.57 | 2.2 | 17.0 | 8.5 |
| 2 | 0.61 | 2.2 | 15.2 | 8.4 | 0.28 | 1.7 | 11.0 | 7.8 |
| 3 | 0.44 | 2.2 | 15.0 | 8.3 | 0.56 | 1.8 | 16.0 | 10.5 |
| 4 | 0.39 | 2.0 | 13.0 | 8.0 | 0.37 | 1.8 | 16.1 | 8.4 |
| 5 | 0.48 | 2.1 | 13.4 | 8.1 | 0.50 | 2.2 | 16.3 | 9.7 |
| 6 | 0.64 | 2.1 | 19.5 | 9.0 | 0.48 | 2.1 | 16.2 | 9.2 |
| 7 | 0.44 | 2.2 | 11.9 | 8.0 | 0.46 | 1.9 | 17.8 | 9.9 |
| 8 | 0.41 | 2.0 | 14.5 | 7.7 | 0.51 | 2.0 | 15.7 | 8.5 |
| 9 | 0.64 | 2.2 | 15.5 | 7.6 | 0.51 | 1.9 | 18.5 | 9.5 |
| 10 | 0.58 | 2.2 | 15.1 | 7.5 | 0.55 | 1.6 | 18.7 | 7.5 |
| 11 | 0.66 | 2.1 | 14.2 | 8.2 | 0.48 | 1.7 | 12.6 | 7.2 |
| 12 | 0.74 | 2.7 | 14.6 | 7.3 | 0.54 | 1.8 | 18.0 | 8.1 |
| 13 | 0.51 | 2.4 | 14.2 | 7.5 | 0.31 | 1.5 | 13.3 | 8.2 |
| 14 | 0.51 | 2.4 | 12.2 | 7.9 | 0.51 | 2.0 | 18.5 | 8.2 |
| 15 | 0.41 | 2.1 | 14.3 | 8.2 | 0.48 | 2.0 | 13.5 | 8.1 |
| 16 | 0.39 | 2.0 | 17.5 | 8.5 | 0.51 | 1.7 | 18.1 | 9.2 |
| 17 | 0.71 | 2.3 | 16.5 | 9.6 | 0.45 | 2.0 | 13.0 | 8.5 |
| 18 | 0.38 | 2.2 | 20.0 | 9.4 | 0.52 | 1.9 | 17.8 | 7.6 |
| 19 | 0.53 | 2.1 | 14.9 | 8.2 | 0.50 | 2.0 | 15.5 | 9.5 |
| 20 | 0.43 | 2.2 | 15.0 | 8.3 | 0.45 | 2.0 | 18.0 | 9.7 |
| Average | 0.52 | 2.2 | 15.2 | 8.2 | 0.48 | 1.9 | 16.1 | 8.7 |

Referring to Tables 1 and 2, it was observed that bean sprouts (Examples 1 to 4) using germinated and fermented beans irradiated with light emitting diodes had shorter full length and body thickness than bean sprouts (Comparative Example) using germinated and fermented beans cultivated by a general cultivation method.

### <Test Example 2> Comparison of coumestrol contents

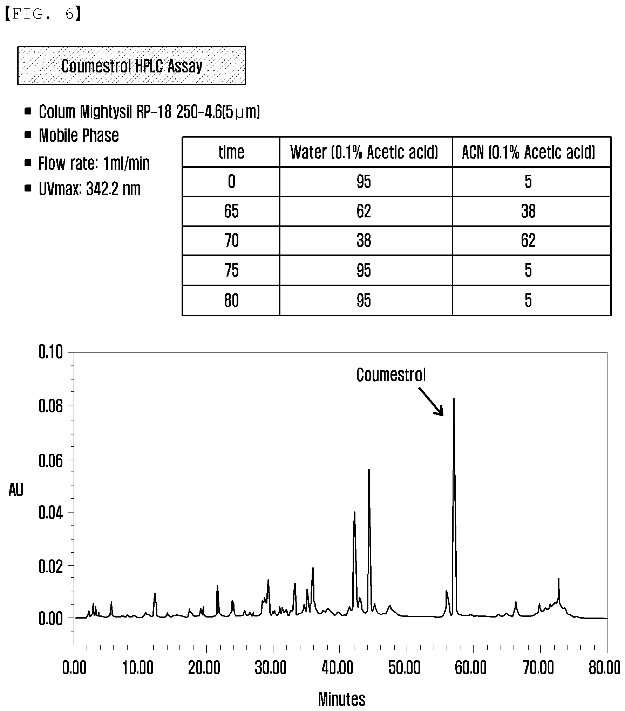

5 g of each of the bean sprouts of Examples 1 to 4 and Comparative Example was taken, and 35 ml of alcohol was added thereto. The resultant mixture was treated by ultrasonic wave for 5 hours at a temperature condition of 50°C, filtered by a 0.45 µm filter, and analyzed under the equipment conditions of the attached FIG 6.

The analyzed results were as shown in Table 3 below.

**[Table 3]**

| Sample Name | Concentration of coumestrol (ppm) |
|---|---|
| Example 1 | 365 |
| Example 2 | 217 |
| Example 3 | 177 |
| Example 4 | 174 |
| Comparative Example | 77 |

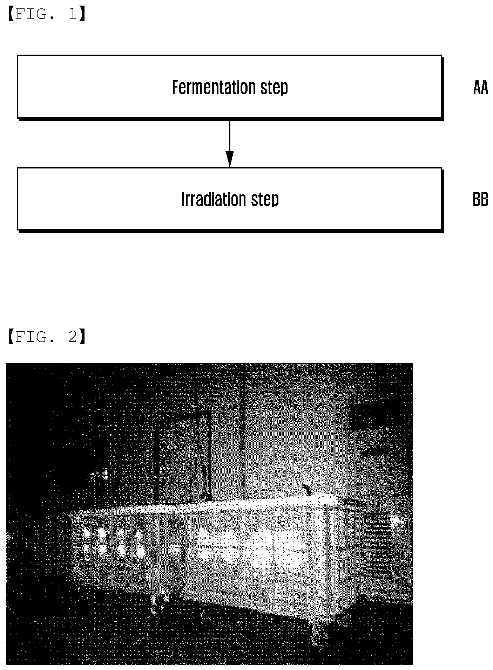

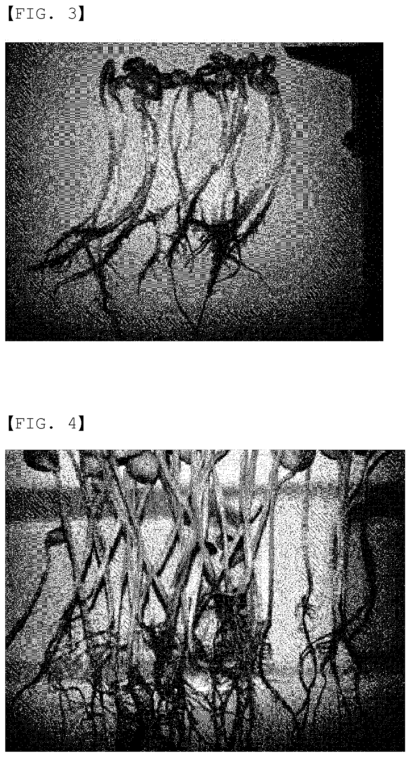

FIG. 2 is a photograph of a light emitting diode control box for irradiating light emitting diodes according to another embodiment of the present invention. FIG. 3 is a photograph of bean sprouts in which germinated and fermented beans according to another embodiment of the present invention are generally cultivated. FIG. 4 is a photograph of bean sprouts in which germinated and fermented beans according to another embodiment of the present invention are cultivated by using light emitting diodes. When comparing FIGS. 3 and 4, it was found that hypocotyls of the bean sprouts using germinated and fermented beans cultivated through general cultivation methods are white, while hypocotyls of the germinated and fermented beans cultivated by using light emitting diodes was purple.

### Industrial applicability

The germinated fermented bean having an increased content of coumestrol produced by the method for increasing the content of coumestrol of germinated and fermented beans by using light emitting diodes according to the present invention increases the functionality of beans and exhibits the effects of being able to create higher added value compared with conventional beans.

## Claims

1. A method for increasing the content of coumestrol of germinated and fermented beans using light emitting diodes, the method comprising a fermentation step of germinating a bean and fermenting the bean by an inoculation with *Aspergillus oryzae* to prepare a germinated and fermented bean; and an irradiation step of irradiating light emitting diodes to the germinated and fermented bean,
wherein the irradiation step is carried out by irradiating light emitting diodes at a wavelength of 620 nm to 670 nm.

2. The method for increasing the content of coumestrol of germinated and fermented beans using light emitting diodes according to claim 1, wherein the irradiation step is carried out 2 to 10 times every 20 to 40 minutes per day, for 1 to 7 days.

## Patentansprüche

1. Verfahren zum Erhöhen des Coumestrolgehalts von gekeimten und fermentierten Bohnen unter Verwendung von Leuchtdioden, wobei das Verfahren einen Fermentationsschritt umfasst, bestehend im Keimen einer Bohne und Fermentieren der Bohne durch Inokulation mit *Aspergillus oryzae* zum Herstellen einer gekeimten und fermentierten Bohne; und einen Bestrahlungsschritt zum Strahlen von Leuchtdioden auf die gekeimte und fermentierte Bohne,
wobei der Bestrahlungsschritt durch Strahlen von Leuchtdioden mit einer Wellenlänge von 620 nm bis 670 nm durchgeführt wird.

2. Verfahren zum Erhöhen des Coumestrolgehalts von gekeimten und fermentierten Bohnen unter Verwendung von Leuchtdioden gemäß Anspruch 1, wobei der Bestrahlungsschritt 2 bis 10 Mal alle 20 bis 40 Minuten pro Tag für 1 bis 7 Tage durchgeführt wird.

## Revendications

1. Procédé pour augmenter la teneur en coumestrol de haricots germés et fermentés en utilisant des diodes électroluminescentes, le procédé comprenant une étape de fermentation consistant à faire germer un haricot et à faire fermenter le haricot par une inoculation avec *Aspergillus oryzae* pour préparer un haricot germé et fermenté ; et une étape d'irradiation consistant à irradier des diodes électroluminescentes sur le haricot germé et fermenté,
dans lequel l'étape d'irradiation est mise en œuvre en irradiant des diodes électroluminescentes à une longueur d'onde de 620 nm à 670 nm.

2. Procédé pour augmenter la teneur en coumestrol de haricots germés et fermentés en utilisant des diodes électroluminescentes selon la revendication 1, dans lequel l'étape d'irradiation est mise en œuvre 2 à 10 fois toutes les 20 à 40 minutes par jour, pendant 1 à 7 jours.
